# EUROPÄISCHE PATENTSCHRIFT

(11) **EP 0 931 761 B1**
(45) Veröffentlichungstag und Bekanntmachung des Hinweises auf die Patenterteilung: **16.08.2001**
(21) Anmeldenummer: 99100531.5
(22) Anmeldetag: 13.01.1999
(51) Int. Cl.: B67D 5/60

(54) **Verfahren und Vorrichtung zur Verbindung von Flüssigkeitsbehältern mit einem Rohr-Hüllrohrsystem**
Method and device for connecting fluid-containers by a system of pipes with backup pipes
Méthode et dispositif pour connecter des conteneurs de liquides par un système de tubes avec tubes de sécurité

(30) Priorität: 27.01.1998 DE 19802926
(43) Veröffentlichungstag der Anmeldung: 28.07.1999
(73) Patentinhaber: Schwelm Anlagen Service GmbH, 58332 Schwelm (DE)
(72) Erfinder: Löw, Manfred, 85375 Neufahrn (DE)
(74) Vertreter: Langmaack, Jürgen, Dipl.-Ing.

(56) Entgegenhaltungen:
- EP-A- 0 748 976
- GB-A- 2 304 392
- US-A- 4 653 541
- US-A- 5 257 652
- US-A- 5 265 652

## Beschreibung

Behälteranlagen, wie beispielsweise Tankstellen, weisen in der Regel wenigstens einen im Erdreich gelagerten Behälter oder Tank zur Aufnahme von wenigstens einer Kraftstoffsorte und wenigstens eine mit dem Tank über entsprechende Rohrleitungen verbundene Abgabeeinrichtung, beispielsweise in Form einer Zapfsäule sowie wenigstens eine den Behälter mit der Abgabeeinrichtung verbindenden Flüssigkeitsleitung auf. Aufgrund der neueren Bestimmungen ist es erforderlich, daß selbst bei einer Zapfsäule für nur eine Otto-Kraftstoffsorte neben der Kraftstoffleitung auch eine Gasrückführleitung vorgesehen sein muß, die die Zapfpistole an der Zapfsäule mit dem Tank verbindet. Bei einem Mehrkammertank zur Aufnahme von mehreren unterschiedlichen Kraftstoffsorten mit mehreren Zapfsäulen oder auch bei der Anordnung von mehreren Tanks, müssen dann entsprechend der Zahl der Kraftstoffsorten und entsprechend der Zahl der Zapfsäulen eine Vielzahl von Rohrleitungen sowie entsprechende Fülleitungen für die Tanks im Erdboden verlegt werden. Diese Rohrleitungen müssen aus Sicherheits- und Umweltschutzgründen bei Anforderungen als nichtselbstsichernd und flüssigkeitsführend doppelwandig und druckdicht ausgeführt sein. Schon bei einer Zapfsäule für die üblichen drei Otto-Kraftstoffsorten sowie für Diesel-Kraftstoff ergeben sich hier eine Vielzahl von im Erdboden zu verlegenden Rohrleitungen mit einem entsprechenden Bauaufwand. Hinzu kommen dann noch die elektrischen Steuerleitungen zum Schalten der Pumpe und zur Übertragung der an der Zapfsäule erfaßten Meßwerte für Menge und Zahlungsbetrag an den Kassenrechner.

US-A-5,265,652 und US-A-5,257,652 offenbaren ein Leitungssystem für Tankstellenanlagen, bei welchem die Flüssigkeitsleitung und die Gasrückführleitung teilweise unterirdisch in einer Ummantelung, in aller Regel aus flexiblen Kunststoffen, geführt sind. Diese Ummantelung wird bei Aufbau einer Tankstellenanlage auf der Baustelle montiert, was arbeitsintensiv ist und dadurch höhere Kosten verursacht.

In GB-A-3 304 392 wird ein beheizbares Pipelinerohr für die Off-shore-Technik beschrieben, das zur Verlegung im Meer für die Förderung von Erdöl und/oder Erdgas verwendet werden soll. Dieses Pipelinerohr weist eine thermische Isolierung im Inneren des Außenrohrmantels sowie eine Beheizung der flüssigkeitsführenden Innenrohre auf. Ein derartiges Pipelinerohr ist für flüssigkeitsführende Rohre einer Behälteranlage mit Abgabeeinrichtung, wie sie insbesondere an Tankstellen für Kraftstoffe eingesetzt werden sollen, nicht anwendbar. Treibstoffe sind möglichst kühl zu lagern und zu transportieren, um zum einen ein Ausdampfen von flüchtigen Additiven zu vermindern und zum anderen, um die bei der Abgabe einwandfreie Volumenzumessung zu gewährleisten.

Der Erfindung liegt die Aufgabe zugrunde, die Errichtung von Tankstellen zu vereinfachen.

Diese Aufgabe wird erfindungsgemäß mit den im Anspruch 1 angegebenen Verfahrensschritten gelöst. Die Verwendung eines gemeinsamen Mantelelementes für alle den Tankbehälter mit der Abgabeeinrichtung zu verbindenden Rohrleitungen führt zu einer erheblichen Reduzierung des Bauaufwandes. Da die Abstände zwischen einem Domschacht am Tankbehälter einerseits und der Abgabeeinrichtung andererseits bei der Planung einer Behälteranlage festliegen, ist auch der Verlauf der Leitungen zwischen dem Domschacht und der Abgabeeinrichtung, beispielsweise einer Zapfsäule, vorgegeben. Damit ist auch die Möglichkeit gegeben, das Mantelelement mit den im Mantelelement zu führenden Rohrleitungen werkstattmäßig vorzufertigen, so daß auf der Baustelle nur noch das fertige Mantelelement im Erdreich zu verlegen und jeweils mit seinem Endbereich am Domschacht zu kürzen und an der Zapfsäulenwanne anzuschließen ist. Aufwendige Schweißarbeiten sowie das Nachisolieren der Schweißstellen auf der Baustelle entfallen weitgehend. Der besondere Vorteil des erfindungsgemäßen Verfahrens kommt vor allem dann zum Tragen, wenn bei einem Mehrkammertank und/oder bei mehreren Tanks zur Aufnahme unterschiedlicher Flüssigkeitssorten jeweils alle zu einer Zapfsäule gehörenden Flüssigkeitsleitungen sowie die gemeinsame Gasrückführleitung durch das Mantelelement geführt werden. Statt der Verlegung von mehreren einwandigen oder doppelwandigen Rohren für jede einzelne Flüssigkeitssorte bedarf es nur der Verlegung eines werkstattmäßig vorgefertigten Mantelelementes. Bei Abgabeeinrichtungen für Otto-Kraftstoffe ist eine Gasrückführeinrichtung mit Gasrückführleitungen vorzusehen. Diese können nach dem erfindungsgemäßen Verfahren ebenfalls durch das Mantelelement für die Flüssigkeits- bzw. Kraftstoffleitungen geführt werden.

### - Fortsetzung Seite 3 der ursprünglichen Unterlagen -

In weiterer vorteilhafter Ausgestaltung der Erfindung ist vorgesehen, daß die der jeweiligen Zapfsäule zugeordneten elektrischen Steuerleitungen durch wenigstens ein im Mantelelement angeordnetes Leerrohr geführt werden. Auch dies führt zu einer Vereinfachung des Bauaufwandes.

In weiterer Ausgestaltung des erfindungsgemäßen Verfahrens ist vorgesehen, daß das Mantelelement jeweils mit seinen Enden an der jeweiligen Anschlußstelle (Domschacht und/oder Zapfsäulen-Auffangwanne) flüssigkeitsdicht angeschlossen wird.

In weiterer vorteilhafter Ausgestaltung des erfindungsgemäßen Verfahrens ist vorgesehen, daß das Mantelelement und/oder die hindurchgeführten Rohrleitungen vor dem Abdecken mit Erdreich durch Druckbeaufschlagung auf Dichtigkeit geprüft werden. Der besondere Vorteil des erfindungsgemäßen Verfahrens besteht auch darin, daß bereits die werkstattmäßig vorgefertigten Mantelelemente in der Werkstatt einer Druckprüfung unterzogen werden können, so daß durch eine Druck- und Dichtigkeitsprüfung auf der Baustelle nur noch eine Abnahmekontrolle durchzuführen ist, um sicherzugehen, daß nicht durch Beschädigungen auf dem Transport und/oder bei der Montage Undichtigkeiten aufgetreten sind. Später kann dann ein Leckanzeigegerät zur ständigen Überwachung angeschlossen werden

Die Erfindung betrifft ferner ein Mantelelement für Verbindungsleitungen zwischen einem Kraftstofftank und einer Zapfsäule, insbesondere ein Mantelelement zur Durchführung des erfindungsgemäßen Verfahrens. Das erfindungsgemäße Mantelelement weist einen rohrförmigen Mantelkörper auf, in dem wenigstens zwei Rohre angeordnet sind, die jeweils durch eine endseitige Stirnwand des Mantelkörpers abgedichtet hindurchgeführt sind, sowie wenigstens ein mit dem Innenraum des Mantelkörpers in Verbindung stehenden Prüfelement. Als Prüfelement kann ein Prüfventil und/oder ein Leckanzeigegerät vorgesehen werden. Für die Herstellung des Mantelkörpers können für gerade Stücke handelsübliche Rohre mit Kreisquerschnitt oder auch mit polygonalem Querschnitt, beispielsweise Vierkantrohre, verwendet werden. Für die Herstellung von Bögen können entweder entsprechende Halbschalen verwendet werden, die von beiden Seiten auf die entsprechend gekrümmten und in ihrer Zuordnung zueinander positionierten Verbindungsleitungen aufgesetzt und dann mit zwei entsprechenden Längsnähten verschweißt werden. Zweckmäßig kann es aber auch sein, einen derartigen "Krümmer" als Teilpolygon auszuführen, wobei dann von einem handelsüblichen Rohrstück unter entsprechenden Winkeln Teilstücke abgelängt werden, so daß ein derartiger Krümmer dem Verlauf eines Teils eines Achtecks entspricht. Die Teilstücke werden dann auf die entsprechend positionierten Verbindungsleitungen aufgeschoben und mit dem jeweiligen folgenden Teilstück mit einer umlaufenden Schweißnaht verbunden. Für die Stirnseiten ist dann jeweils eine entsprechende Abschlußscheibe vorzusehen, die mit der notwendigen Zahl von Durchgangslöchern für die Verbindungsleitungen versehen ist. Diese wird auf die endseitig herausragenden Verbindungsleitungen aufgeschoben und dann zumindest mit dem Mantelkörper verschweißt. Die einzelnen Verbindungsleitungen können dann entweder ebenfalls mit der Stirnscheibe fest und dicht verschweißt sein oder aber zunächst lose hindurchgesteckt sein und dann über zusätzliche Dichtelemente, beispielsweise elastische Preßringdichtungen oder dergl. abgedichtet sein.

In zweckmäßiger Ausgestaltung der Erfindung ist vorgesehen, daß die Rohre im Innenraum des Mantelkörpers mit Stützelementen versehen sind. Derartige Stützelemente können ebenfalls durch entsprechende Lochscheiben oder durch Einzelstege gebildet werden, die mit den Rohren verbunden sind.

In weiterer vorteilhafter Ausgestaltung der Erfindung ist vorgesehen, daß der Mantelkörper an wenigstens einem Ende mit einer am Außenumfang angeordneten Dichteinrichtung für den Anschluß an einen Domschacht und/oder eine Auffangwanne versehen ist. Eine derartige Dichteinrichtung erlaubt baustellenseitig eine Steckmontage für das vorgefertigte Mantelelement, wobei die Dichteinrichtung so ausgebildet sein muß, daß eine gewisse Verschwenkbarkeit zum Ausgleich von Winkelabweichungen möglich ist.

In zweckmäßiger weiterer Ausgestaltung der Erfindung ist vorgesehen, daß der Mantelkörper auf seiner Außenfläche mit einer Korrosionsschutzumhüllung versehen ist. Hier bietet die Möglichkeit der Erfindung, daß die einzelnen Mantelelemente werkstattmäßig vorgefertigt werden können, weitere Vorteile. Der Mantelkörper kann aus handelsüblichen Stahlrohren hergestellt werden, die nach der vollständigen Fertigstellung des Mantelelementes durch ein überlappendes Umwickeln mit Korrosiosnschutzbändern, wie sie auf dem Pipelinebau bekannt sind, versehen werden kann. Hierdurch ist sichergestellt, daß auch alle Schweißnähte am Mantelkörper einwandfrei gegen Korrosion geschützt sind. Die Verwendung von herstellerseitigen PE-umhüllten Rohren ist ebenfalls möglich. Hierbei müssen dann die Bereiche der Schweißstellen nachisoliert werden. Auch die Verwendung von Kunststoffrohren für den Mantelkörper kann zweckmäßig sein.

Die Erfindung wird anhand schematischer Zeichnungen von Ausführungsbeispielen näher erläutert. Es zeigen:
- Fig. 1: in einer Perspektive eine als Tankstelle ausgebildete Behälteranlage mit der bisher üblichen Anordnung der Verbindungsleitungen,
- Fig. 2: die gleiche Tankstelle in der Erstellung nach dem erfindungsgemäßen Verfahren,
- Fig. 3: ein Mantelelement als Verbindungsleitung
- Fig. 4: einen Querschnitt durch das Mantelelement gem. Fig. 3
- Fig. 5: ein Verlegungsdetail für das Mantelelement gem. Fig. 3,
- Fig. 6: einen Mehrkammertank für Kraftstoffe für eine Tankstelle

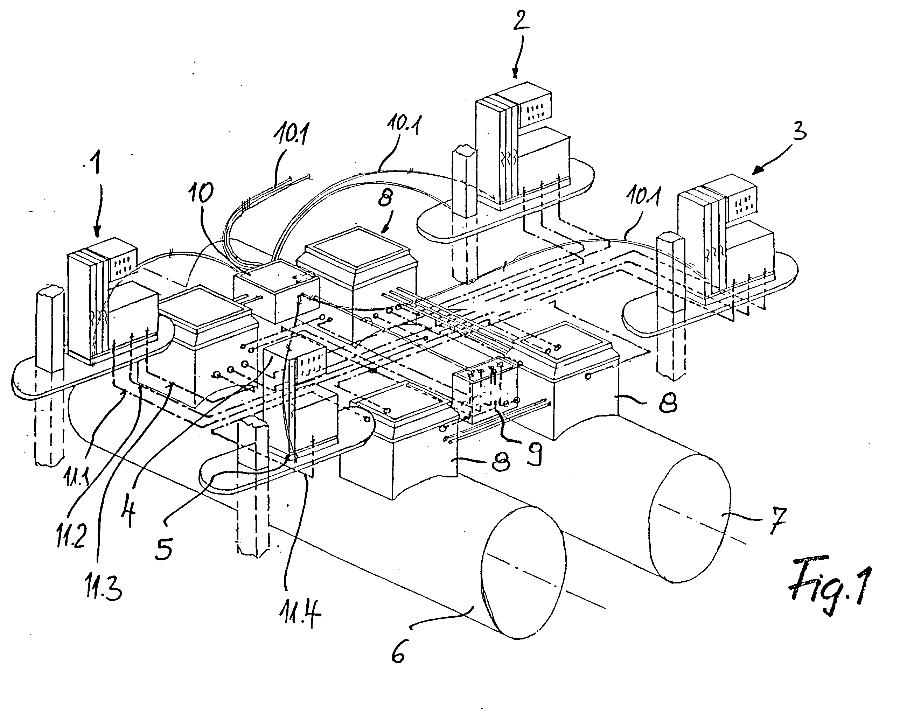

Die in Fig. 1 schematisch in einer Perspektive dargestellte, als Tankstelle ausgebildete Behälteranlage mit einer Rohrverlegung nach dem Stande der Technik weist drei Zapfsäulen 1, 2, und 3 mit je drei Zapfpistolen für die verschiedenen Sorten von Otto-Kraftstoffen auf. Die Zapfsäule 4 ist für die Abgabe von Diesel-Kraftstoff vorgesehen. Die Zapfsäulen 1, 2, 3 und 4 stehen jeweils in einer auf dem Erboden aufliegenden in die Zapfinsel integrierten Auffangwanne 5. Die Tankstelle weist ferner zwei im Erdreich gelagerte Tanks 6 und 7 auf, die jeweils mit zwei Domschächten 8 versehen sind, deren Oberkanten niveaugleich mit dem Erdboden sind und die jeweils mit einem hier nicht näher dargestellten Schachtdeckel abgedeckt sind. Jeweils zwischen zwei benachbarten Domschächten der beiden Tanks ist ein Füllschacht 9 angeordnet. Dieser wird so angeordnet, daß eine Verbindung mit den Tankdomschächten entsteht, in denen auch die Rohre gefüllt werden. Ein Elektroschacht 10 ist ebenfalls vorgesehen.

Wie aus Fig. 1 ferner ersichtlich, sind von den beiden Tanks zu jeder der Zapfsäulen 1, 2, 3 und 4 entsprechende Rohrleitungen 11.1, 11.2, 11.3 und 11.4 für die einzelnen Kraftstoffsorten geführt und in der jeweiligen Zapfsäule den betreffenden Zapfpistolen zugeordnet. Der besseren Übersichtlichkeit halber sind die jeder Zapfsäule zugeordnete Gasrückführleitung nicht dargestellt. Zusätzlich zu den zu verlegenden Rohrleitungen 11 sind dann auch noch vom Elektroschacht 10 jeweils zu jeder Zapfsäule die entsprechenden Steuerleitungen 10.1 zu verlegen, die vom Elektroschacht 10 aus mit dem Kassenraum in Verbindung stehen. Fig. 1 läßt augenfällig den erheblichen Bau- und Montageaufwand erkennen, der durch eine derartige Einzelrohrverlegung erforderlich ist.

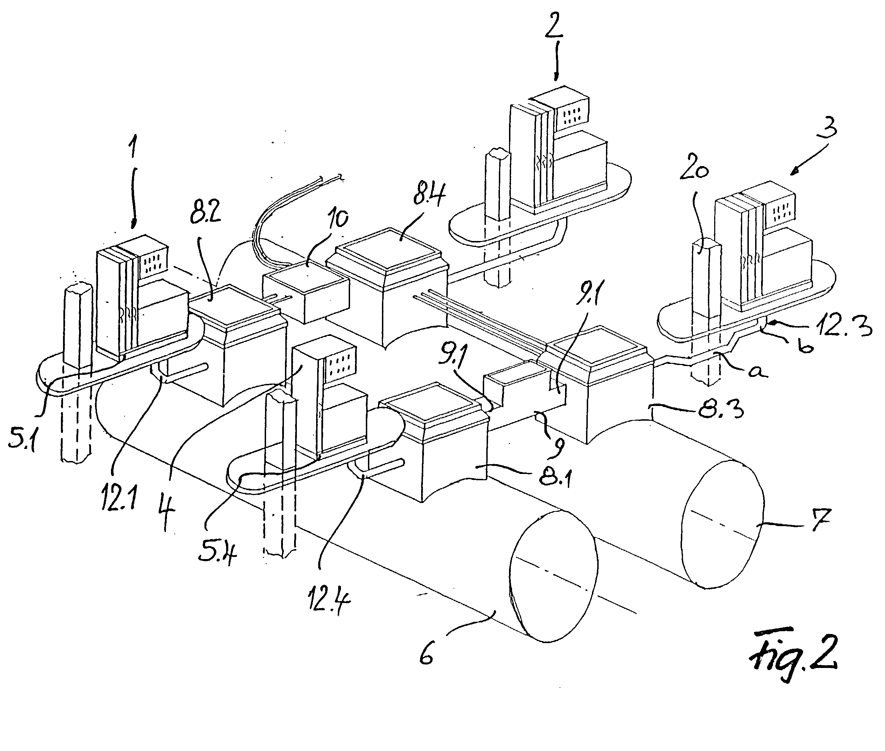

In Fig. 2 ist der gleiche Tankstellenaufbau dargestellt, hier jedoch nach dem erfindungsgemäßen Verfahren errichtet. Gleiche Bauelemente sind mit den gleichen Bezugszeichen versehen, so daß insoweit auf die Beschreibung zu Fig. 1 verwiesen werden kann.

Der wesentliche Unterschied bei der Errichtung einer Tankstelle nach dem erfindungsgemäßen Verfahren besteht darin, daß die Rohrleitungen 11 sowie die zugehörige Gasrückführleitung zu den einzelnen Zapfsäulen nicht mehr einzeln verlegt werden, sondern "gebündelt" durch ein gemeinsames Mantelelement 12, das jeweils aus einem Domschacht 8 durch das Erdreich hindurch bis zur zugehörigen Zapfsäule 1, 2, 3 oder 4 durch die Auffangwanne 5 hindurchgeführt ist. Die Mantelelemente 12, die in ihrem Aufbau im einzelnen nachstehend noch näher beschrieben werden, sind werkstattmäßig vorgefertigt und erlauben eine sehr viel einfachere Verlegung, wie schon ein Vergleich zwischen Fig. 1 und Fig. 2 zeigt.

Eine weitere Besonderheit des Errichtungsverfahrens nach der Erfindung besteht darin, daß auch der Tank selbst als Mantelkörper für Rohrleitungen verwendet werden kann, wie dies aus dem schematischen Längsschnitt gem. Fig. 6 ersichtlich ist. Die Fülleitungen für die einzelnen Tanks bzw. die einzelnen Tankkammern gehen vom Füllschacht 9 aus und sind durch einen seitlichen Schachtansatz 9.1 jeweils in einen der benachbarten Domschächte 8 geführt. Soweit in einem Tank, beispielsweise dem Tank 7, mehrere Kammern für unterschiedliche Kraftstoffsorten vorgesehen sind, werden die zu den einzelnen Kammern zugehörigen Fülleitungen ebenfalls nicht mehr durch das Erdreich verlegt, wie dies bei der Anordnung gem. Fig. 1 noch der Fall war, sondern die einzelnen Fülleitungen sind im Tankinnenraum längs der Firstlinie verlegt.

Des weiteren sind aber auch alle Kraftstoffleitungen vom jeweiligen Tank bzw. von der jeweiligen Tankkammer, soweit sie in Tanklängsrichtung geführt werden müssen, ebenfalls innerhalb des Tankinnenraums geführt und erst im jeweiligen Domschacht 8 aus dem Tank herausgeführt, so daß beispielsweise eine von einer mittleren Tankkammer im Tank 7 ausgehende Kraftstoffleitung zunächst längs des Innenraums bis in den vorderen Domschacht 8.3 geführt ist, von dort durch den Füllschacht 9, der den Domschacht 8.3 des Tanks 7 mit dem Domschacht 8.1 des Tanks 6 verbindet und von dort wieder in den Innenraum des Tanks 6 bis zum Domschacht 8.2, in dem die betreffende Kraftstoffleitung dann aus dem Tankinnenraum herausgeführt und durch das Mantelelement 12 zur Zapfsäule 1 geführt ist. Auch hier dient der Tank selbst als Mantelkörper für diese Rohrleitungen. Auch dieser Bereich kann somit werkstattmäßig vorgefertigt werden, indem bei der Herstellung des Tanks die Rohrleitungen in den Tank eingebaut werden. Auf der Baustelle müssen dann nur noch die jeweiligen Verbindungen mit den als Verbindungsleitungen dienenden ebenfalls vorgefertigten Mantelelementen 12 vorgenommen werden.

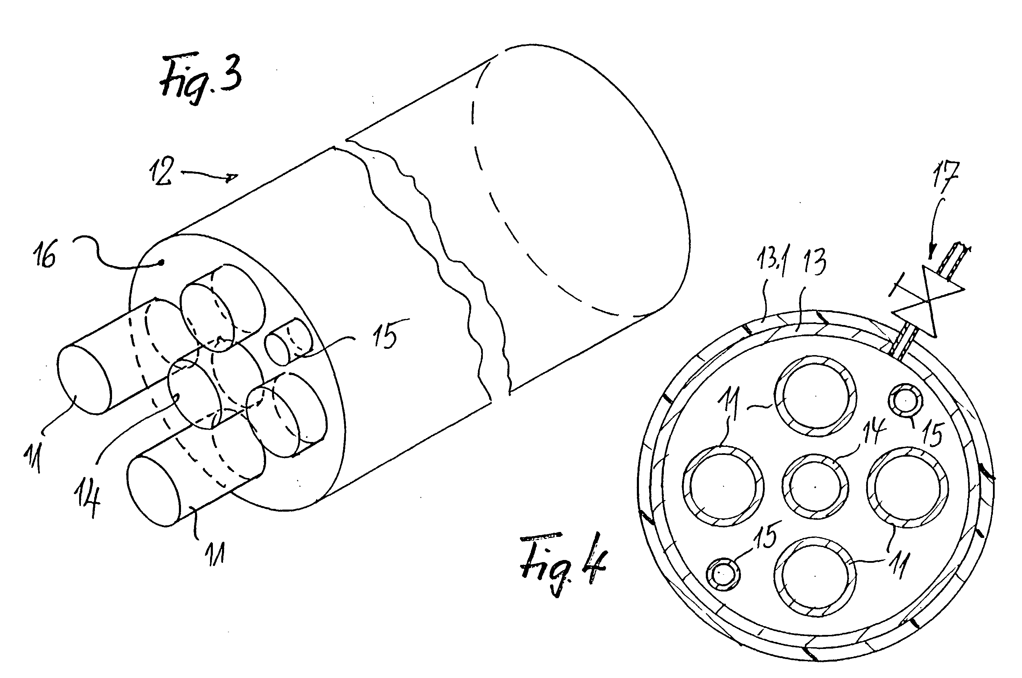

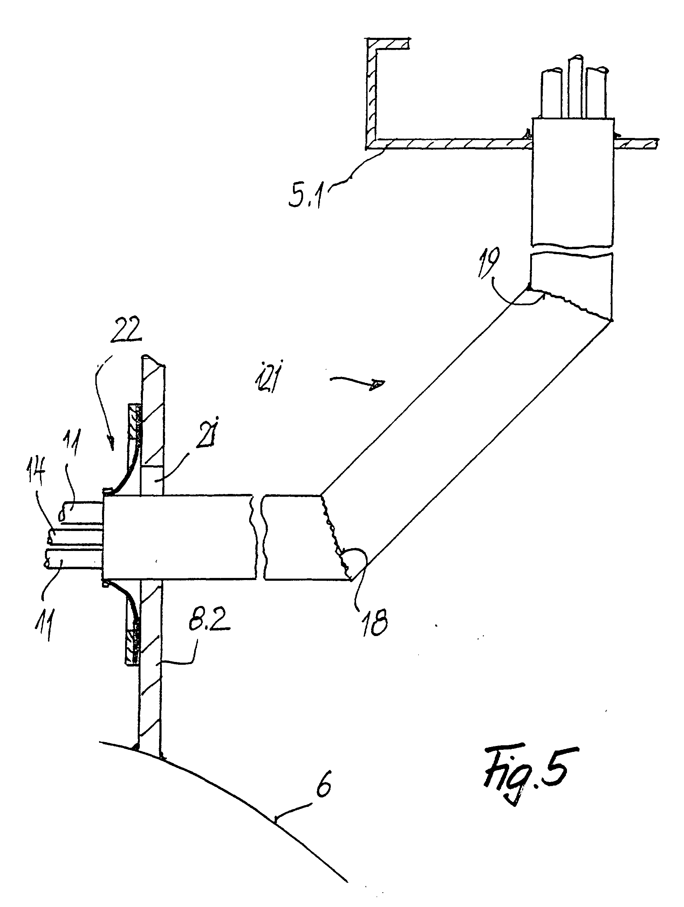

In den Fig. 3 und 4 ist in einer perspektivischen Zeichnung und in einem Querschnitt ein Mantelelement 12 dargestellt. Dieses besteht im wesentlichen aus einem rohrförmigen Mantelkörper 13, in dem beispielsweise vier Kraftstoffleitungen 11 sowie eine Gasrückführleitung 14 angeordnet sind. Zusätzlich zu den Kraftstoffleitungen 11 und der Gasrückführleitung 14 sind im Mantelkörper 13 noch zusätzlich zwei Leerrohre 15 zur Aufnahme von elektrischen Steuerleitungen angeordnet. Bei dem hier dargestellten Ausführungsbeispiel weist der Mantelkörper 13 einen Kreisquerschnitt auf. Es ist aber auch möglich., hier einen polygonalen Querschnitt, beispielsweise einen quadratischen Querschnitt vorzusehen. Wie Fig. 3 erkennen läßt, ist der Mantelkörper 13 stirnseitig mit einer Scheibe 16 dicht abgeschlossen, die mit entsprechenden Durchführungsöffnungen für die einzelnen Rohrleitungen 11, 14 und 15 versehen ist. Die einzelnen Rohre können in ihren Durchführungen durch die Scheibe 16 mit dieser fest verschweißt sein oder aber auch durch entsprechende druckfeste Dichtungen hindurchgeführt sein. Der Mantelkörper 13 besteht beispielsweise aus einem Stahlrohr. Das Stahlrohr ist zum Schutz gegen Korrosion auf seiner Außenseite mit einer Korrosionsschutzumhüllung 13.1 versehen. Statt eines Stahlrohres ist es auch möglich, hier ein Kunststoffrohr mit entsprechender Festigkeit vorzusehen.

Der Innenraum des Mantelelementes 12 steht mit der Umgebung über ein Prüfelement 17, beispielsweise Prüfventil, in Verbindung. Ferner ist in den Innenraum des Mantelelementes 12 der Sensor eines Leckanzeigegerätes eingeführt. Oder der Zwischenraum ist mit N₂ gefüllt und an ein Leckanzeigegerät angeschlossen.

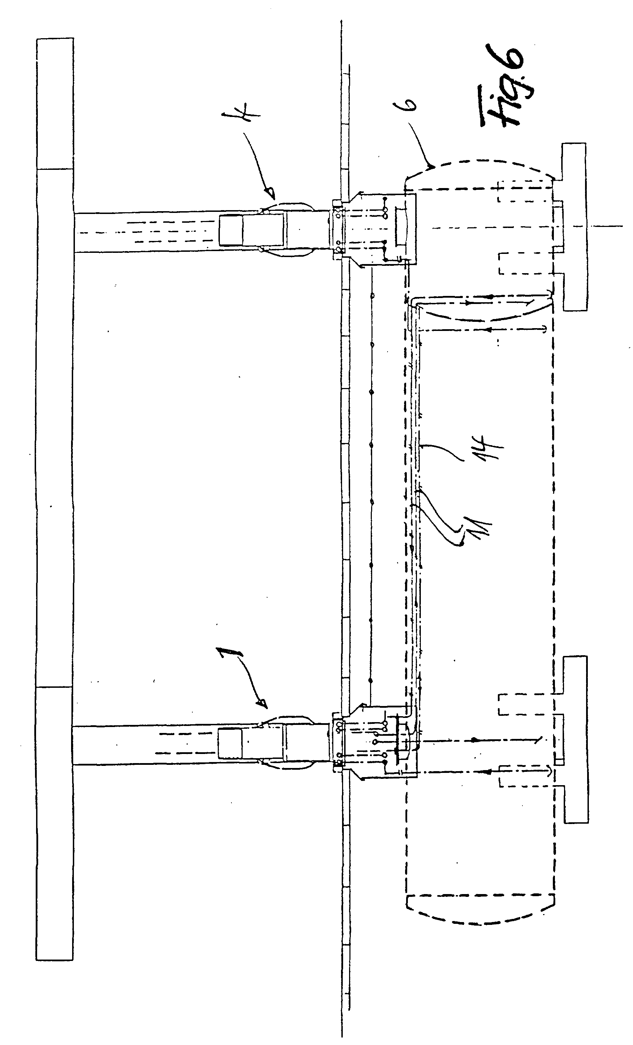

In Fig. 5 ist schematisch und in größerem Maßstab beispielsweise die Verbindung des Mantelelementes 12.1 mit der Auffangwanne 5.1 an der Zapfsäule 1 und dem Domschacht 8.2 am Tank 6 dargestellt. Bei dem hier dargestellten Ausführungsbeispiel ist das mit den entsprechenden Leitungen 11, 14 und 15 versehene Mantelelement 12.1 als Krümmer ausgebildet und weist einen beispielsweise quadratischen Querschnitt auf. Die "Krümmung" ist durch einzelne gerade Rohrschüsse zusammengesetzt, die unter einem entsprechenden Winkel von einer Rohrlänge abgelängt und entsprechend verdreht wieder über eine Schweißnaht 18 und 19 miteinander verschweißt sind. Bei rundem Querschnitt sind entsprechende Bögen einzusetzen. Hieraus ist ersichtlich, daß die Mantelelemente nicht nur in gerader Erstreckung, wie in Fig. 3 dargestellt, sondern auch als "Krümmer" ausgeführt werden können. Ein derartiger "Krümmer" kann nicht nur in einer ebenen Ausführung hergestellt werden, sondern es ist bei entsprechender Wahl der die späteren Schweißstellen 18 und 19 bildenden Schnittebenen möglich, auch einen räumlich gekrümmten Verlauf darzustellen, wobei auch beliebige Winkelführungen der Mantelelemente möglich sind. So ist es beispielsweise möglich, wie für das Mantelelement 12.3 dargestellt, eine Tragsäule 20 für das Tankstellendach zu "umfahren". Hierbei ist die erste Krümmung a in einer horizontalen Ebene ausgerichtet, während die zweite Krümmung b hierzu vertikal oder schräg ausgerichtet nach oben führt.

Wie Fig. 5 ebenfalls erkennen läßt, ist ein Ende des Mantelelementes 12.1 mit der Auffangwanne 5.1 dicht verbunden, beispielsweise verschweißt.

Das andere Ende ist durch eine seitliche Öffnung 21 im Domschacht 8.2 hindurchgesteckt, wobei der verbleibende Spalt über eine Dichteinrichtung 22 abgedichtet ist. Die Durchführung des Mantelelementes 12 in den Domschacht 8 ist hierbei zweckmäßig so ausgebildet, daß auch eine in bezug auf die Ebene der Wandfläche des Domschachtes schräge Einführung möglich ist, um nicht vermeidbare Winkel- und Maßabweichungen auszugleichen. Die Dichteinrichtung 22 kann hierbei durch eine Dichtmanschette oder dergl. gebildet werden.

Fig. 6 zeigt einen Mehrkammertank für eine Tankstelle. Während bei der konventionellen Ausführungsform, wie in Fig. 1 dargestellt, alle für den Anschluß von Zapfsäulen erforderlichen Rohrleitungen aus dem jeweiligen Domschacht herausgeführt und jeweils für sich im Erdreich verlegt sind, ist bei der in Fig. 6 dargestellten Ausführungsform beispielsweise im Tank 6 die Anordnung so getroffen, daß die für die einzelnen Zapfsäulen erforderlichen Rohrleitungen 11, d. h. Fülleitungen und Saugleitungen sowie die Gasrückführleitungen 14, soweit sie in Tanklängsrichtung verlegt werden müssen, innerhalb des Tankinnenraumes fest verlegt sind. Zweckmäßigerweise ist die Anordnung so getroffen, daß die Rohrleitungen im Firstbereich angeordnet sind.

## Patentansprüche

1. Verfahren zur Errichtung einer Behälteranlage für wenigstens zwei Flüssigkeitssorten mit einer im Erdreich gelagerten Behälternanordnung, insbesondere mit wenigstens einem im Erdbereich gelagerten Behälter zur Aufnahme von wenigstens zwei unterschiedlichen Flüssigkeitssorten, und wenigstens einer Abgabeeinrichtung für die getrennte Abgabe der beiden Flüssigkeitssorten, insbesondere einer Zapfsäule, dadurch gekennzeichnet, daß jeweils alle die Behälteranordnung mit der Abgabeeinrichtung verbindenden Leitungen für die verschiedenen Flüssigkeiten in einem werkstattmäßig vorgefertigten bis zum Anschlußbereich der Behälteranordnung einerseits und der Abgabeeinrichtung andererseits reichenden Mantelelement zusammengefaßt verlegt werden, das diese Leitungen auf ihrer ganzen Länge druckdicht umschließt, wobei die Anschlußenden der Leitungen durch einen stirnseitigen Abschluß des Mantelelementes abgedichtet hindurchgeführt sind.

2. Verfahren nach Anspruch 1, dadurch gekennzeichnet, daß bei Behälteranlagen zur Aufnahme unterschiedlicher Kraftstoffsorten zusätzlich eine gemeinsame Gasrückführleitung durch das Mantelelement geführt wird.

3. Verfahren nach einem der Ansprüche 1 oder 2, dadurch gekennzeichnet, daß die der Zapfsäule zugeordneten elektrischen Steuerleitungen durch wenigstens ein im Mantelelement angeordnetes Leerrohr geführt werden.

4. Verfahren nach einem der Ansprüche 1 bis 3, dadurch gekennzeichnet, daß das Mantelelement und/oder die hindurchgeführten Rohrleitungen vor dem Abdecken mit Erdreich durch Druckbeaufschlagung auf Dichtigkeit geprüft werden.

5. Verfahren nach einem der Ansprüche 1 bis 4, dadurch gekennzeichnet, daß das Mantelelement mit seinen Enden an der jeweiligen Anschlußstelle (Domschacht und/oder Zapfsäulen-Auffangwanne) flüssigkeitsdicht angeschlossen wird.

6. Werkstattmäßig gefertigtes Mantelelement für die Errichtung einer Behälteranlage für die Lagerung von wenigstens zwei Flüssigkeitssorten in wenigstens einem im Erdreich gelagerten Behälter und mit wenigstens einer Abgabeeinrichtung für die getrennte Abgabe der beiden Flüssigkeitssorten, insbesondere einer Zapfsäule zur Durchführung des Verfahrens nach den Ansprüchen 1 bis 5, als Verbindungsleitung zwischen dem Lagerbehälter und der Abgabeeinrichtung, mit einem rohrförmigen formsteifen Mantelkörper (13), in dem nebeneinander wenigstens zwei Rohre (11, 14), jeweils ein Rohr (11, 14) für jeweils eine Flüssigkeitssorte, angeordnet sind, die jeweils durch eine endseitige, den Mantelkörper (13) dicht abschließende Stirnwand abgedichtet hindurchgeführt sind.

7. Mantelelement nach Anspruch 6 für Kraftstoffe, dadurch gekennzeichnet, daß zusätzlich zu den flüssigkeitsführenden Rohren (11) wenigstens eine Gasrückführleitung (14) im Mantelkörper angeordnet ist.

8. Mantelelement nach Anspruch 6 oder 7, dadurch gekennzeichnet, daß zusätzlich zu den flüssigkeitsführenden Rohren (11, 14) wenigstens ein Leerrohr (15) im Mantelkörper (13) angeordnet ist.

9. Mantelelement nach einem der Ansprüche 6 bis 8, dadurch gekennzeichnet, daß die Rohre (11, 14, 15) im Innenraum des Mantelkörpers (13) mit Stützelementen verbunden sind.

10. Mantelelement nach einem der Ansprüche 6 bis 9, dadurch gekennzeichnet, daß der Mantelkörper (13) an wenigstens einem Ende mit einer am Außenumfang angeordneten Dichteinrichtung (21) für den Anschluß an einem Domschacht (8) und/oder einer Auffangwanne (5) versehen ist.

11. Mantelelement nach einem der Ansprüche 6 bis 10, dadurch gekennzeichnet, daß der Mantelkörper (13) auf seiner Außenfläche mit einer Korrosionsschutzumhüllung (13.1) versehen ist.

## Claims

1. Method for the construction of a container installation for at least two types of liquids, the containers being set into the ground, in particular an arrangement comprising at least one underground container to hold at least two different types of liquids, and at least one dispensing device for the separate dispensing of the two types of liquids, in particular a filling pump,
**characterised in that**
in each case all the pipes connecting the container arrangement to the dispensing device for the various liquids are laid together within a factory-prefabricated sheath element that extends as far as the connection area of the container arrangement on the one hand and as far as that of the dispensing device on the other hand, the said sheath enclosing the said pipes in a leakproof way along their entire length, and the connection ends of the pipes passing through a closure on the ends of the sheath element in a leakproof way.

2. Method according to Claim 1,
**characterised in that**
in the case of container installations for holding various types of fuels, a common gas return pipe additionally passes through the sheath element.

3. Method according to either of Claims 1 or 2,
**characterised in that**
the electrical control cables associated with the filling pump pass through at least one empty pipe arranged within the sheath element.

4. Method according to any of Claims I to 3,
**characterised in that**
the sheath element and/or the pipes passing through it are pressure-tested for leaks before being set into the ground.

5. Method according to any of Claims 1 to 4,
**characterised in that**
the sheath element is connected at its ends to the respective connection points (dome shaft and/or filling pump collector trough) in a leakproof way.

6. Factory-prefabricated sheath element for the construction of a container installation for the storage of at least two types of liquids, comprising at least one container set into the ground and at least one dispensing device for the separate dispensing of the two types of liquids, in particular a filling pump, the said sheath element being designed to make possible the construction method according to Claims 1 to 5 by serving as the connection line between the storage container and the dispensing device, the sheath element comprising a tubular sheath body (13) of rigid shape in which at least two pipes (11, 14) are arranged next to one another with one pipe (11, 14) for each respective type of liquid, the said pipes being in each case passed through an end wall that closes the sheath body (13) in a leakproof way.

7. Sheath element according to Claim 6 for fuels,
**characterised in that**
in addition to the pipes (11) carrying liquids, at least one gas return line (14) is arranged in the sheath body.

8. Sheath element according to Claims 6 or 7,
**characterised in that**
in addition to the fluid-carrying pipes (11, 14), at least one empty pipe (15) is arranged in the sheath body (13).

9. Sheath element according to any of Claims 6 to 8,
**characterised in that**
the pipes (11, 14, 15) within the inside space of the sheath body (13) are connected to support elements.

10. Sheath element according to Claims 6 to 9,
**characterised in that**
the sheath body (13) is provided on at least one end with a sealing device (21) on its outer circumference to enable connection to a dome shaft (8) and/or to a collector trough (5).

11. Sheath element according to any of Claims 6 to 10,
**characterised in that**
the sheath body (13) is provided on its outside with a corrosion-protective wrapping (13.1).

## Revendications

1. Procédé destiné à la construction d'une installation de réservoirs pour au moins deux qualités de liquide, comportant un agencement de réservoirs enterrés, notamment au moins un réservoir enterré destiné à la réception de deux qualités au moins de différents liquides, et au moins un dispositif de distribution, notamment une colonne de distribution, pour la distribution séparée des deux qualités de liquide, caractérisé en ce que toutes les conduites pour les différents liquides reliant l'agencement de réservoirs au dispositif de distribution sont posées en étant regroupées dans un élément d'enveloppe préfabriqué en atelier s'étendant, d'une part jusque dans la zone de raccordement de l'agencement de réservoirs, et d'autre part jusqu'au dispositif de distribution, lequel entoure ces conduites de façon étanche à la pression sur toute leur longueur, les extrémités de raccordement des conduites passant de façon étanche par une obturation frontale de l'élément d'enveloppe.

2. Procédé selon la revendication 1, caractérisé en ce que, dans le cas d'installations de réservoirs destinés à la réception de différentes qualités de carburant, une conduite de retour de gaz commune passe en outre dans l'élément d'enveloppe.

3. Procédé selon la revendication 1 ou 2, caractérisé en ce que les lignes de commandes électriques associées à la colonne de distribution passent par au moins un tube vide disposé dans l'élément d'enveloppe.

4. Procédé selon l'une quelconque des revendications 1 à 3, caractérisé en ce que l'étanchéité de l'élément d'enveloppe et/ou des tuyauteries qui y passent est contrôlée par une mise sous pression avant le recouvrement par de la terre.

5. Procédé selon l'une quelconque des revendications 1 à 4, caractérisé en ce que l'élément d'enveloppe est raccordé par ses extrémités de façon étanche aux liquides au point de raccordement respectif (puits de dôme et/ou cuvette de rétention des colonnes de distribution).

6. Elément d'enveloppe préfabriqué en atelier pour la construction d'une installation de réservoirs destinés au stockage d'au moins deux qualités de liquide dans au moins un réservoir enterré, et comportant au moins un dispositif de distribution, notamment une colonne de distribution, pour la distribution séparée des deux qualités de liquide, lequel est destiné en tant que conduite de liaison entre le réservoir de stockage et le dispositif de distribution à la mise en oeuvre du procédé selon l'une quelconque des revendications 1 à 5, et comporte un corps d'enveloppe tubulaire (13) indéformable dans lequel sont disposés côte à côté au moins deux tubes (11, 14), un tube (11, 14) respectif pour une qualité de liquide, qui passent de façon étanche par une paroi frontale d'extrémité qui obture le corps d'enveloppe (13) de façon étanche.

7. Elément d'enveloppe selon la revendication 6 pour carburants, caractérisé en ce que, outre les tubes (11) conduisant des liquides, il est disposé au moins une conduite de retour de gaz (14) dans le corps d'enveloppe.

8. Elément d'enveloppe selon la revendication 6 ou 7, caractérisé en ce que, outre les tubes (11, 14) conduisant des liquides, au moins un tube vide (15) est disposé dans le corps d'enveloppe (13).

9. Elément d'enveloppe selon l'une quelconque des revendications 6 à 8, caractérisé en ce que les tubes (11, 14, 15) sont reliés par des éléments de soutien dans l'espace intérieur du corps d'enveloppe (13).

10. Elément d'enveloppe selon l'une quelconque des revendications 6 à 9, caractérisé en ce que, sur l'une au moins de ses extrémités, le corps d'enveloppe (13) est muni d'un dispositif d'étanchéité (21) prévu sur la circonférence extérieure pour le raccordement à un puits de dôme (8) et/ou à une cuvette de rétention (5).

11. Elément d'enveloppe selon l'une quelconque des revendications 6 à 10, caractérisé en ce que la face extérieure du corps d'enveloppe (13) est munie d'un revêtement de protection contre la corrosion (13.1).
